# EUROPÄISCHE PATENTSCHRIFT

(11) **EP 2 325 429 B1**
(45) Veröffentlichungstag und Bekanntmachung des Hinweises auf die Patenterteilung: **12.09.2018**
(21) Anmeldenummer: 10013837.9
(22) Anmeldetag: 21.10.2010
(51) Int. Cl.: F16H 1/16, F16H 35/10

(54) **Verdeckantrieb**
Tarpaulin drive
Entraînement de capote

(30) Priorität: 18.11.2009 DE 102009053555
(43) Veröffentlichungstag der Anmeldung: 25.05.2011
(73) Patentinhaber: Dr. Ing. h.c. F. Porsche AG, 70435 Stuttgart (DE); Magna Car Top Systems GmbH, 74321 Bietigheim-Bissingen (DE)
(72) Erfinder: Czechtizky, Timo, 73119 Zell u.A. (DE); Schmidt, Horst, 70469 Stuttgart (DE); Engbers, Holger, 49846 Hoogstede (DE)
(74) Vertreter: Sturm, Christoph

(56) Entgegenhaltungen:
- DE-A1- 3 216 402
- TW-U- M 364 145
- US-A- 3 472 551
- US-A- 4 257 285

## Beschreibung

Die Erfindung betrifft einen Verdeckantrieb zur Betätigung eines Kraftfahrzeugverdecks.
Aus der DE 102 17 784 B4 ist eine Antriebsvorrichtung zur Betätigung eines verstellbaren Fahrzeugteils, wie zum Beispiel eines faltbaren Verdecks, eines klappbaren Verdeckkastens oder einer Kofferraumklappe, bekannt. Die dort offenbarte Antriebsvorrichtung verfügt über ein Getriebe und einen mit dem Getriebe zusammenwirkenden Antriebsmotor, wobei das Getriebe eine vom Antriebsmotor bereitgestellte Betätigungskraft bzw. ein vom Antriebsmotor bereitgestelltes Betätigungsmoment auf das zu betätigende, verstellbare Fahrzeugsteil überträgt. Beim Getriebe handelt es sich vorzugsweise um ein Schneckengetriebe und demnach um ein selbsthemmendes Getriebe. Weitere Antriebsvorrichtungen zur Betätigung eines Kraftfahrzeugverdecks sind aus der US 3,472,551 A, aus der DE 38 26 411 A1 sowie aus der DE 101 08 769 A1 bekannt.
Mit den aus dem Stand der Technik bekannten Antriebsvorrichtungen bzw. Verdeckantrieben kann zwar grundsätzlich ein Verdeck eines Kraftfahrzeugs geöffnet sowie geschlossen werden, bislang bereitet es jedoch Schwierigkeiten, einen Verdeckantrieb vor einer Überbelastung zu schützen. Eine derartige Überbelastung kann zum Beispiel dann auftreten, wenn ein zu öffnendes bzw. zu schließendes Verdeck beim Öffnungsvorgang bzw. Schließvorgang gegen ein Hindernis läuft, welches beim Öffnungsvorgang bzw. Schließvorgang einen Widerstand für den Verdeckantrieb darstellt, sodass dann der Verdeckantrieb versucht, das Verdeck gegen diesen Widerstand zu schließen. Hierbei kann der Verdeckantrieb sowie das gesamte Verdeck beschädigt werden. Eine solche Beschädigung des Verdeckantriebs bzw. des gesamten Verdecks ist jedoch zu vermeiden. Weiterhin bereitet es bislang Schwierigkeiten, bei Ausfall des oder jedes Antriebsmotor eines Verdeckantriebs ein Verdeck manuell zu öffnen oder zu schließen. Verdeckantriebe, die eine manuelle Betätigung eines Verdecks erlauben, verfügen über einen komplexen Aufbau.

Hiervon ausgehend liegt der hier vorliegenden Erfindung die Aufgabe zugrunde, einen neuartigen Verdeckantrieb zu schaffen. Diese Aufgabe wird durch einen Verdeckantrieb gemäß Anspruch 1 gelöst.

Der erfindungsgemäße Verdeckantrieb ist konstruktiv einfach. Der erfindungsgemäße Verdeckantrieb erlaubt mit einfachen Mitteln die Bereitstellung eines Schutzes des Verdeckantriebs vor einer Überbelastung. Das oder jedes selbsthemmende Getriebe des erfindungsgemäßen Verdeckantriebs umfasst mindestens zwei Getriebeteile, wobei das erste Getriebeteil an einem Ende an dem Gehäuse des Getriebes schwenkbar gelagert ist und an einem gegenüberliegenden Ende an dem ebenfalls am Gehäuse des Getriebes schwenkbar gelagerten Führungselement geführt ist.

Der erfindungsgemäße Verdeckantrieb erlaubt sowohl eine automatische Überführung des jeweiligen selbsthemmenden Getriebes von der ersten Position, in welcher das erste Getriebeteil und das zweite Getriebeteil in Eingriff stehen, in die zweite Position, in welcher das erste Getriebeteil und das zweite Getriebeteil außer Eingriff stehen, als auch umgekehrt eine automatische Überführung von der zweiten Position in die erste Position. Hiermit ist dann, wenn zum Überlastschutz bei Überschreiten des Grenzwerts für das am ersten Getriebeteil anliegende Moment bzw. für die an demselben anliegende Kraft das Getriebe von der ersten Position in die zweite Position überführt wurde, nach Unterschreiten dieses Grenzwerts kein manueller Zugriff auf den Verdeckantrieb erforderlich. Auch die Rückstellung von der zweiten Position in die erste Position bei Unterschreiten des Grenzwerts erfolgt selbsttätig.

Vorzugsweise ist dem Führungselement ein Anschlag zugeordnet, der dann, wenn das Führungselement zusammen mit dem ersten Getriebeteil des jeweiligen Getriebes entgegen der Federkraft des Federelements selbsttätig aus der ersten Position in die zweite Position überführt wird, die Relativbewegung zwischen dem ersten Getriebeteil und dem Führungselement beschränkt. Durch den dem Führungselement zugeordneten Anschlag wird einfach und zuverlässig sichergestellt, dass bei Überführen des Getriebes von der ersten Position in die zweite Position eine Relativbewegung zwischen dem ersten Getriebeteil des jeweiligen Getriebes und dem Führungselement desselben beschränkt wird. Es besteht keine Gefahr, dass bei Überführung des Getriebes von der ersten Position in die zweite Position das erste Getriebeteil außer Eingriff mit dem Führungselement gelangt.

Nach einer vorteilhaften Weiterbildung der Erfindung ist dem Führungselement ein Betätigungselement zugeordnet, mit Hilfe dessen das Führungselement zusammen mit dem ersten Getriebeteil des jeweiligen selbsthemmenden Getriebes entgegen der Federkraft des Federelements manuell aus der ersten Position in die zweite Position überführbar ist. Über das Betätigungselement kann an dem erfindungsgemäßen Verdeckantrieb einfach eine Notentriegelungsfunktion realisiert werden. Sollte daher der oder jeder Antriebsmotor des erfindungsgemäßen Verdeckantriebs ausfallen, so kann dann über das Betätigungselement das jeweilige selbsthemmende Getriebe manuell von der ersten Position in die zweite Position überführt werden, um so unter Aufhebung der selbsthemmenden Wirkung des Getriebes das Kraftfahrzeugverdeck manuell zu öffnen bzw. zu schließen.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1:: eine schematisierte Darstellung eines Details eines erfindungsgemäßen Verdeckantriebs in einem ersten Zustand des Verdeckantriebs;
- Fig. 2:: das Detail der Fig. 1 in einem zweiten Zustand des Verdeckantriebs;
- Fig. 3:: das Detail der Fig. 1 in einem dritten Zustand des Verdeckantriebs;
- Fig. 4:: ein weiteres Detail des eines erfindungsgemäßen Verdeckantriebs; und
- Fig. 5:: das Detail V der Fig. 4.

Die hier vorliegende Erfindung betrifft einen Verdeckantrieb zur Betätigung eines Kraftfahrzeugverdecks.

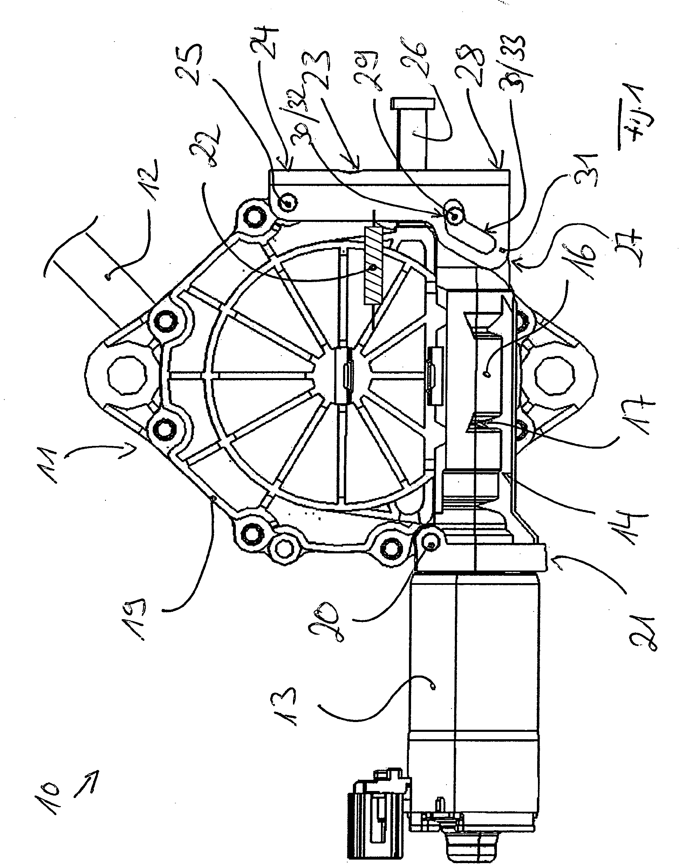

Fig. 1 bis 4 zeigen unterschiedliche Details des erfindungsgemäßen Verdeckantriebs 10, wobei der erfindungsgemäße Verdeckantrieb 10 vorzugsweise zu beiden Seiten des zu betätigenden Kraftfahrzeugverdecks jeweils ein Getriebe 11 aufweist, über welches der Verdeckantrieb 10 an ein Verdeckgestänge 12 des zu betätigenden Kraftfahrzeugverdecks gekoppelt bzw. angebunden werden kann. Mit jedem Getriebe 11 wirkt im gezeigten, bevorzugten Ausführungsbeispiel jeweils ein Antriebmotor 13 zusammen.

Es sei bereits an dieser Stelle darauf hingewiesen, dass es selbstverständlich auch möglich ist, beiden Getrieben 11 einen gemeinsamen Antriebsmotor zuzuordnen, der dann über eine Antriebswelle an den beiden Getrieben 11 angreift.

Jedes Getriebe 11 ist als selbsthemmendes Getriebe ausgeführt, nämlich im gezeigten Ausführungsbeispiel als Schneckengetriebe. Zwischen das jeweilige selbsthemmende Schneckengetriebe 11 und das Verdeckgestänge 12 kann ein weiteres nicht selbsthemmendes Getriebe wie zum Beispiel ein Planetengetriebe geschaltet sein.

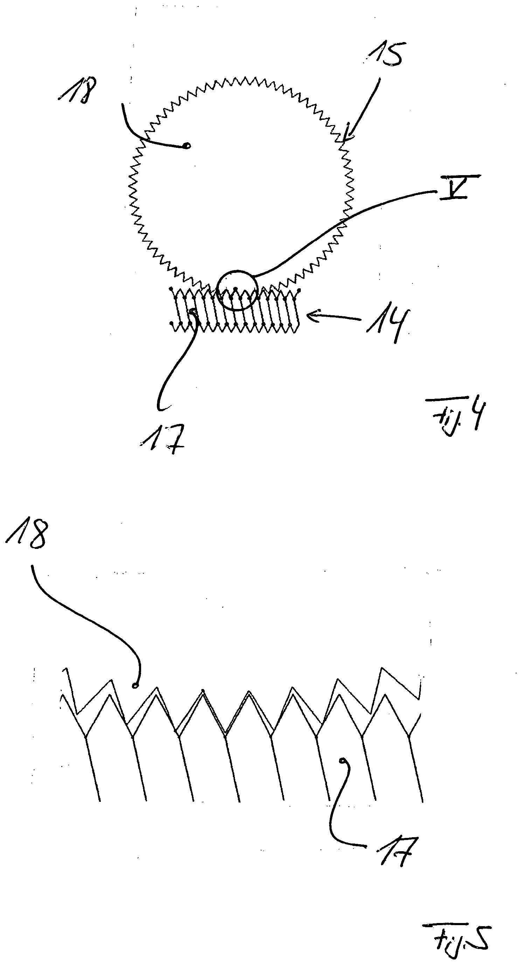

Jedes selbsthemmende Getriebe 11 umfasst ein erstes Getriebeteil 14 sowie ein zweites Getriebeteil 15, wobei bei einem Schneckengetriebe das erste Getriebeteil 14 des jeweiligen Getriebes 11 zumindest ein Schneckengehäuse 16 und eine im Schneckengehäuse 16 aufgenommene Schnecke 17 und das zweite Getriebeteil 15 zumindest ein mit der Schnecke 17 des ersten Getriebeteils 14 zusammenwirkendes Schneckenrad 18 umfasst. Schnecke 17 und Schneckenrad 18 sind in Fig. 4 und 5 in größerem Detail gezeigt.

Das erste Getriebeteil 14 eines jeden selbsthemmenden Getriebes 11 ist an einem Gehäuse 19 des jeweiligen Getriebes 11 schwenkbar gelagert. Fig. 1 kann entnommen werden, dass das Schneckengehäuse 16 des ersten Getriebeteils 14 zusammen mit der im Schneckengehäuse 16 aufgenommenen Schnecke 17 und dem an der Schnecke 17 angreifenden Antriebsmotor 13 um ein erstes Gelenk 20 am Gehäuse 19 des Getriebes 11 schwenkbar gelagert ist, wobei dieses Gelenk 20 einem ersten Ende 21 des ersten Getriebeteils 14 und damit im gezeigten Ausführungsbeispiel einem ersten Ende 21 des Schneckengehäuses 16 zugeordnet ist.

Es sei darauf hingewiesen, dass es im Unterscheid zum gezeigten Ausführungsbeispiel, in welchem die Einheit aus erstem Getriebeteil 14 und Antriebsmotor 13 um das Gelenk 20 insgesamt schwenkbar am Gehäuse 19 gelagert ist, alternativ möglich ist, dass der Antriebsmotor 13 feststeht und zwischen Antriebsmotor 13 und erstem Getriebeteil 14 eine flexible Welle angeordnet ist, so dass das erste Getriebeteil 14, im gezeigten Ausführungsbeispiel das Scheckengehäuse 16 zusammen mit der Schecke 17, um das Gelenk 20 relativ zum feststehenden Antriebsmotor 13 geschwenkt werden kann.

Am Gehäuse 19 des jeweiligen Getriebes 11 ist weiterhin ein von einem Federelement 22 beaufschlagtes Führungselement 23 für das erste Getriebeteil 14, im gezeigten Ausführungsbeispiel für das Schneckengehäuse 16, schwenkbar gelagert, wobei das Führungselement 23 für das erste Getriebeteil 14 an einem ersten Ende 24 desselben um ein zweites Gelenk 25 am Gehäuse 19 schwenkbar gelagert ist.

Das erste Getriebeteil 14, welches um das Gelenk 20 am Gehäuse 19 des jeweiligen Getriebes 11 schwenkbar gelagert ist, sowie das Führungselement 23, welches um das Gelenk 25 am Gehäuse 19 des jeweiligen Getriebes 11 schwenkbar gelagert sind, wirken zusammen.

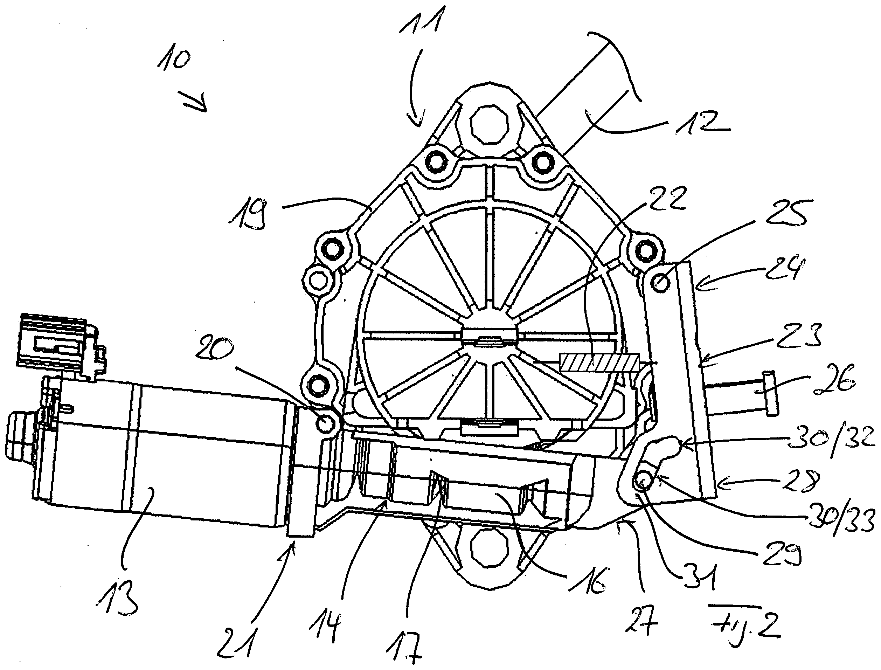

Das erste Getriebeteil 14 und das Führungselement 23 wirken derart zusammen; dass das erste Getriebeteil 14 am Führungselement 23 derart geführt ist, dass dann, wenn eine an dem ersten Getriebeteil 14 anliegende Kraft bzw. ein entsprechendes Moment einen Grenzwert überschreitet, das Führungselement 23 zusammen mit dem ersten Getriebeteil 14 entgegen der vom Federelement 22 bereitgestellten Federkraft selbsttätig aus der in Fig. 1 gezeigten Position, in welcher das erste Getriebeteil 14 und das zweite Getriebeteil 15 in Eingriff stehen, heraus in die in Fig. 2 gezeigte Position, in welcher das erste Getriebeteil 14 und das zweite Getriebeteil 15 des jeweiligen Getriebes 11 außer Eingriff stehen, überführbar ist.

Ebenso ist dann, wenn die an dem ersten Getriebeteil 14 des jeweiligen Getriebes 11 anliegende Kraft bzw. das jeweilige Moment den definierten Grenzwert unterschreitet, das Führungselement 23 zusammen mit dem ersten Getriebeteil 14 des jeweiligen Getriebes 11 durch die Federkraft des Federelements 22 selbsttätig aus der in Fig. 2 gezeigten Position heraus in die in Fig. 1 gezeigte Position überführbar.

Wie bereits ausgeführt, ist das erste Getriebeteil 14 des jeweiligen selbsthemmenden Getriebes 11 um das erste Gelenk 20 am Gehäuse 19 des Getriebes 11 schwenkbar gelagert, welches dem ersten Ende 21 des ersten Getriebeteils 14 zugeordnet ist. Das Führungselement 23 ist um das Gelenk 25 schwenkbar am Gehäuse 19 des jeweiligen selbsthemmenden Getriebes 11 gelagert, wobei das Gelenk 25 dem ersten Ende 24 des Führungselements 23 zugeordnet ist.

Das erste Getriebeteil 14 ist mit einem dem ersten Ende 21 gegenüberliegenden zweiten Ende 27 desselben an einem dem ersten Ende 24 des Führungselements 23 gegenüberliegenden zweiten Ende 28 des Führungselements 23 geführt, nämlich im gezeigten Ausführungsbeispiel derart, dass ein dem zweiten Ende 27 des ersten Getriebeteils 14 zugeordneter Führungsstift 29 in einer dem zweiten Ende 28 des Führungselements 29 zugeordneten Kulisse 30 führt ist.

Die Kulisse 30 weist dabei gemäß Fig. 1 bis 3 zwei zueinander abgewinkelte Abschnitte 32, 33 auf.

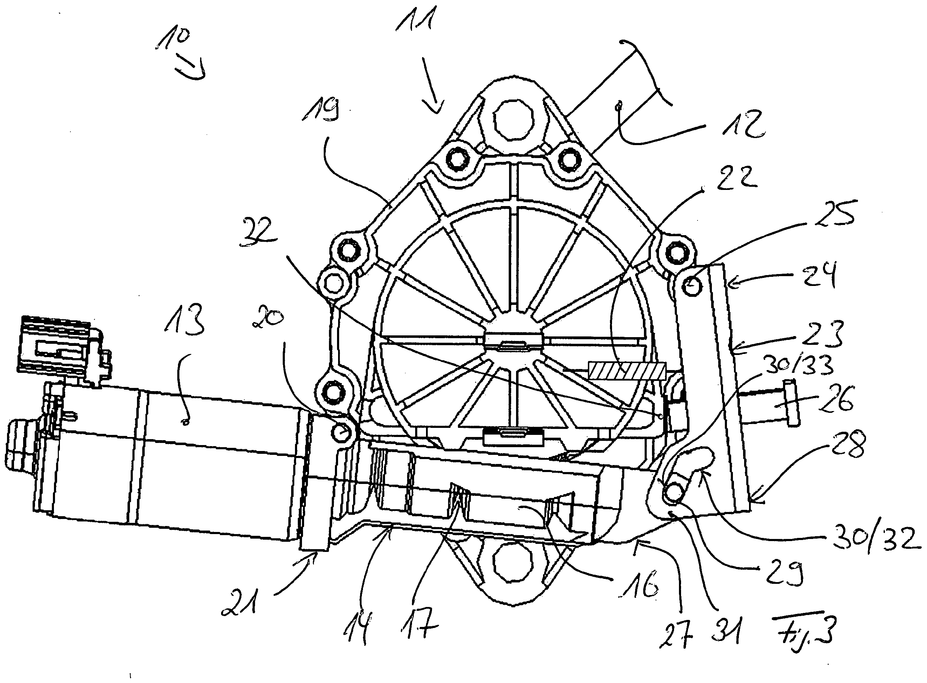

Dann, wenn das Getriebe 11 bzw. die Getriebeteile 14 und 15 desselben die erste Position (siehe Fig. 1) einnehmen, ist der Führungsstift 29 im oberen, relativ flachen Abschnitt 32 der Kulisse 30 geführt. Dann hingegen, wenn die beiden Getriebeteile 14 und 15 des Getriebes 11 zueinander in die zweite Position (siehe Fig. 2, 3) überführt sind, ragt der Führungsstift 29 in den unteren, relativ steilen Abschnitt 33 der Kulisse 30 hinein.

Die Kulisse des Führungselements 29 kann alternativ auch gerade verlaufend ausgebildet sein, also einen einzigen schräg verlaufenden Abschnitt ohne Knick aufweisen.

Dem Führungselement 23 ist am zweiten Ende 28 desselben, an welchem das erste Getriebeteil 14 des jeweiligen selbsthemmenden Getriebes 11 angreift bzw. geführt ist, ein Anschlag 31 zugeordnet, wobei dieser Anschlag 31 im gezeigten Ausführungsbeispiel vom Führungselement 23 ausgebildet wird, sodass die Kulisse 30 im Bereich des unteren, relativ steil verlaufenden Abschnitts geschlossen ist.

Dadurch wird gewährleistet, dass dann, wenn das erste Führungselement 23 zusammen mit dem ersten Getriebeteil 14 des jeweiligen selbsthemmenden Getriebes 11 entgegen der Federkraft des Federelements 22 aus der ersten Position in die zweite Position überführt wird, die Relativbewegung zwischen dem ersten Getriebeteil 14 und dem Führungselement 23 beschränkt wird, sodass das erste Getriebeteil 14 stets mit dem Führungselement 23 verbunden bzw. in Eingriff bleibt.

Im gezeigten Ausführungsbeispiel kann demnach der Führungsstift 29, der dem ersten Getriebeteil 14 zugeordnet ist, niemals aus der dem Führungselement 23 zugeordneten Kulisse 13 heraus bewegt werden, vielmehr hält der Anschlag 31 den Führungsstift 29 stets in der Kulisse 30.

Anstelle des Anschlags 31 kann alternativ dem Gelenk 20 eine Drehwinkelbegrenzung am Gehäuse 19 zugeordnet sein, welche die Relativbewegung zwischen dem ersten Getriebeteil 14 und dem Führungselement 23 beschränkt und gewährleistet, dass das erste Getriebeteil 14 stets mit dem Führungselement 23 verbunden bzw. in Eingriff bleibt.

Der bereits erwähnte Grenzwert für die am ersten Getriebeteil 14 anliegende Kraft bzw. das an demselben anliegende Moment wird so ausgelegt, dass der Grenzwert größer ist als eine maximale Antriebskraft des jeweiligen Antriebsmotors 13, die zu einem regulären Öffnen bzw. Schließen des Kraftfahrzeugversdecks benötigt wird. Dies erfolgt durch entsprechende Abstimmung bzw. Auslegung des Federelements 22 sowie der Form der Kulisse 30. Unabhängig von der konkreten Ausführung der Kulisse 30 als Kulisse mit zwei zueinander abgewinkelten Abschnitten 32, 33 oder als gerade verlaufende Kulisse hat deren Winkel zur Tangente eines Schwenkradius um das Gelenk 20 neben der Federkonstante des Federelements 22 Einfluss auf den Grenzwert.

Der obige Grenzwert für die am ersten Getriebeteil 14 anliegende Kraft bzw. das an demselben anliegende Moment wird vorzugsweise so ausgelegt, dass dann, wenn ein mit Hilfe des erfindungsgemäßen Verdeckantriebs 10 zu öffnendes oder zu schließendes Verdeck gegen einen Anschlag läuft, ohne dass zusätzlich entgegen der Öffnungsbewegung oder Schließbewegung des Verdecks eine Kraft auf dasselbe ausgeübt wird, der Grenzwert noch nicht überschritten wird, sodass dann in diesem Fall die beiden Getriebeteile 14, 15 des jeweiligen selbsthemmenden Getriebes 11 in Eingriff bleiben und der Antriebsmotor 13 einfach stehen bleibt, jedoch weiter bestromt wird und dann aufgrund eines Überhitzungsschutzes abschaltet.

Erst dann, wenn zusätzlich entgegen der Öffnungsbewegung oder Schließbewegung des Verdecks eine Kraft auf dasselbe ausgeübt wird, wird der Grenzwert überschritten wird, sodass dann die beiden Getriebeteile 14, 15 des jeweiligen selbsthemmenden Getriebes 11 außer Eingriff gelangen. Dies ist zum Beispiel dann der Fall, wenn das zu öffnende oder zu schließende Verdeck während der Fahrt des Fahrzeugs betätigt wird und dabei das Verdeck auf ein Hindernis trifft oder wenn im Stillstand des Fahrzeugs absichtlich gegen das sich bewegende Verdeck gedrückt wird.

Beim Federelement 22 kann es sich um eine Zugfeder handeln. Dann, wenn das Federelement 22 als Zugfeder ausgebildet ist, greift dasselbe einerseits am Gehäuse 19 und andererseits am Führungselement 23 an und zieht das Führungselement 23 in die in Fig. 1 gezeigte Position, in welcher dann die beiden Getriebeteile 14 und 15 des selbsthemmenden Getriebes 11 in Eingriff stehen.

Beim Federelement 22 kann es sich alternativ um eine Schenkelfeder oder ein anderes Federelement handeln. Eine Schenkelfeder kann um das Gelenk 25 angeordnet sein.

Die oben beschriebene Auslegung des erfindungsgemäßen Verdeckantriebs 10 erlaubt demnach auf einfache und zuverlässige Weise die Bereitstellung eines Überlastschutzes für den Verdeckantrieb 10, der in beide Richtungen, also sowohl bei Überschreiten des Grenzwerts für den Überlastschutz als auch bei Unterschreiten desselben selbsttätig die beiden Getriebeteile 14 und 15 des jeweiligen selbsthemmenden Getriebes 11 in Eingriff oder außer Eingrifft bringt, sodass zum Zwecke des Überlastschutzes bzw. zu dessen Rückgängigmachung kein manueller Zugriff auf den erfindungsgemäßen Verdeckantrieb 10 erforderlich ist.

Nach einer vorteilhaften Weiterbildung des erfindungsgemäßen Verdeckantriebs 10 ist dem Führungselement 23 ein Betätigungselement 26 zugeordnet, mithilfe dessen das Führungselement 23 insbesondere bei Ausfall des entsprechenden Antriebsmotors 13 zusammen mit dem ersten Getriebeteil 14 des jeweiligen selbsthemmenden Getriebes 11 entgegen der Federkraft des Federelements 22 manuell aus der Fig. 1 gezeigten Position in eine in Fig. 3 gezeigte, zweite Position überführt werden kann, in welcher dann wiederum die beiden Getriebeteile 14 und 15 des selbsthemmenden Getriebes 11 unter Aufhebung der Selbsthemmung des Getriebes 11 nicht miteinander in Eingriff stehen.

Bei dieser durch das Betätigungselement 26 manuell initiierbaren Verlagerung der beiden Getriebeteile 14 und 15 des jeweiligen selbsthemmenden Getriebes 11 zueinander beschränkt wiederum der Anschlag 31 des Führungselements 23 die relative Verlagerbarkeit des Führungselements 23 und des ersten Getriebeteils 14 zueinander, sodass auch bei der manuellen Überwindung der Selbsthemmung des Getriebes 11 keine Gefahr besteht, dass das erste Getriebeteil 14 außer Eingriff mit dem Führungselement 23 gelangt.

Im gezeigten Ausführungsbeispiel ist das Betätigungselement 26 als Betätigungsschraube ausgebildet, die über ein Außengewinde verfügt, welches in einer ein Innengewinde aufweisenden Ausnehmung des Führungselements 23 geführt ist.

Um manuell die Selbsthemmung des Getriebes 11 zu überwinden, wird das Betätigungselement 26 manuell weiter in Richtung auf das Gehäuse 11 bewegt, wobei sich hierbei die Betätigungsschraube 26 an einem Abschnitt 32 (siehe Fig. 3) des Gehäuses 19 abstützt und mit zunehmender Verdrehung das Führungselement 23 um das Gelenk 25 verschwenkt, wobei hierbei der Führungsstift 29 des ersten Getriebeteils in der Kulisse 30 des Führungselements 23 in den unteren, relativ steil verlaufenden Abschnitt der Kulisse 30 gelangt und so letztendlich die beiden Getriebeteile 14 und 15 des jeweiligen selbsthemmenden Getriebes 11 unter Aufhebung der Selbsthemmung desselben außer Eingriff gebracht werden.

### Bezugszeichenliste

- 10: Verdeckantrieb
- 11: Getriebe
- 12: Verdeckgestänge
- 13: Antriebmotor
- 14: Getriebeteil
- 15: Getriebeteil
- 16: Schneckengehäuse
- 17: Schnecke
- 18: Schneckenrad
- 19: Gehäuse
- 20: Gelenk
- 21: Ende
- 22: Federelement
- 23: Führungselement
- 24: Ende
- 25: Gelenk
- 26: Betätigungselement
- 27: Ende
- 28: Ende
- 29: Führungsstift
- 30: Kulisse
- 31: Anschlag
- 32: Abschnitt
- 33: Abschnitt

## Patentansprüche

1. Verdeckantrieb zur Betätigung eines Kraftfahrzeugverdecks, mit mindestens einem selbsthemmenden Getriebe (11), über welches der Verdeckantrieb an ein Verdeckgestänge des Kraftfahrzeugverdecks ankoppelbar ist, wobei das jeweilige selbsthemmende Getriebe (11) ein Gehäuse (19), ein erstes Getriebeteil (14) und ein zweites Getriebeteil (15) aufweist, und mit einem Antriebsmotor (13), über den das erste Getriebeteil (14) des jeweiligen selbsthemmenden Getriebes (11) betätigbar ist, wobei die Betätigung des ersten Getriebeteils (14) über das zweite Getriebeteil (15) des jeweiligen selbsthemmenden Getriebes (11) auf das Verdeckgestänge übertragbar ist,
**dadurch gekennzeichnet, dass** das erste Getriebeteil (14) des jeweiligen Getriebes (11) an dem Gehäuse (19) des Getriebes (11) schwenkbar gelagert ist, wobei an dem Gehäuse (19) des Getriebes (11) weiterhin ein durch ein Federelement(22) beaufschlagtes Führungselement (23) für das erste Getriebeteil (14) des jeweiligen Getriebes (11) schwenkbar gelagert ist, an welchem das erste Getriebeteil (14) des jeweiligen Getriebes (11) derart geführt ist, dass dann, wenn eine an dem ersten Getriebeteil (14) anliegende Kraft bzw. ein an demselben anliegendes Moment einen definierten Grenzwert überschreitet, das Führungselement (23) zusammen mit dem ersten Getriebeteil (14) des jeweiligen Getriebes entgegen der Federkraft des Federelements (22) selbsttätig aus einer ersten Position, in welcher das erste Getriebeteil (14) und das zweite Getriebeteil (15) des jeweiligen Getriebes (11) in Eingriff stehen, in eine zweite Position, in welcher das erste Getriebeteil (14) und das zweite Getriebeteil (15) des jeweiligen Getriebes (11) außer Eingriff stehen, überführbar ist, und dass dann, wenn die an dem ersten Getriebeteil (14) des jeweiligen Getriebes (11) anliegende Kraft bzw. das an demselben anliegendes Moment den definierten Grenzwert unterschreitet, das Führungselement (12) zusammen mit dem ersten Getriebeteil (14) des jeweiligen Getriebes durch die Federkraft des Federelements (22) selbsttätig aus der zweiten Position in die erste Position überführbar ist.

2. Verdeckantrieb nach Anspruch 1, **dadurch gekennzeichnet, dass** das erste Getriebeteil (14) des jeweiligen Getriebes (11) zumindest ein Schneckengehäuse (16) und ein in demselben aufgenommen Schnecke (17) umfasst.

3. Verdeckantrieb nach Anspruch 2, **dadurch gekennzeichnet, dass** das zweite Getriebeteil (15) des jeweiligen Getriebes (11) zumindest ein mit der Schnecke (14) des ersten Getriebeteils zusammenwirkendes Schneckenrad (18) umfasst.

4. Verdeckantrieb nach einem der Ansprüche 1 bis 3, **dadurch gekennzeichnet, dass** das erste Getriebeteil (14) des jeweiligen Getriebes (11) an einem ersten Ende (21) desselben um ein erstes Gelenk (20) am Gehäuse (19) des Getriebes (11) und das Führungselement (23) an einem ersten Ende (24) desselben um ein zweites Gelenk (25) am Gehäuse (19) des Getriebes (11) schwenkbar gelagert ist, und dass das erste Getriebeteil (14) mit einem dem ersten Ende (21) desselben gegenüberliegenden zweiten Ende (27) an einem dem ersten Ende (25) des Führungselements (23) gegenüberliegenden zweiten Ende (28) des Führungselements (23) geführt ist.

5. Verdeckantrieb nach einem der Ansprüche 1 bis 4, **dadurch gekennzeichnet, dass** dem Führungselement (23) ein Anschlag (31) zugeordnet ist, der dann, wenn das Führungselement (23) zusammen mit dem ersten Getriebeteil (14) des jeweiligen Getriebes entgegen der Federkraft des Federelements (22) aus der ersten Position in die zweite Position überführt wird, die Relativbewegung zwischen dem ersten Getriebeteil (14) und dem Führungselement (23) beschränkt.

6. Verdeckantrieb nach Anspruch 5, **dadurch gekennzeichnet, dass** das erste Getriebeteil (14) des jeweiligen Getriebes (11) einen Führungsstift (29) aufweist, der in einer Kulisse (30) des Führungselements (23) geführt ist, wobei der Kulisse (30) der Anschlag (31) zugeordnet ist, der dann, wenn das Führungselement (23) zusammen mit dem ersten Getriebeteil (14) des jeweiligen Getriebes (11) entgegen der Federkraft des Federelements (22) aus der ersten Position in die zweite Position überführt wird, den Führungsstift (29) des ersten Getriebeteils (14) in der Kulisse (30) des Führungselements (23) hält.

7. Verdeckantrieb nach Anspruch 6, **dadurch gekennzeichnet, dass** die Kulisse (30) zueinander abgewinkelte Abschnitte (32, 33) aufweist.

8. Verdeckantrieb nach einem der Ansprüche 1 bis 7, **dadurch gekennzeichnet, dass** dem Führungselement (23) ein Betätigungselement (26) zugeordnet ist, mit Hilfe dessen das Führungselement (23) zusammen mit dem ersten Getriebeteil (14) des jeweiligen Getriebes entgegen der Federkraft des Federelements (22) manuell aus der ersten Position in die zweite Position überführbar ist.

9. Verdeckantrieb nach Anspruch 8, **dadurch gekennzeichnet, dass** das Betätigungselement (26) als Betätigungsschraube ausgebildet ist, deren Außengewinde in einer ein Innengewinde aufweisen Ausnehmung des Führungselement (23) geführt ist.

10. Verdeckantrieb nach einem der Ansprüche 1 bis 9, **dadurch gekennzeichnet, dass** derselbe zwei selbsthemmende Getriebe (11) aufweist, über welche derselbe zu beiden Seiten des Kraftfahrzeugverdecks an das Verdeckgestänge ankoppelbar ist.

11. Verdeckantrieb nach Anspruch 10, **dadurch gekennzeichnet, dass** jedem selbsthemmenden Getriebe (11) ein separater Antriebsmotor (13) zugeordnet ist.

12. Verdeckantrieb nach Anspruch 10, **dadurch gekennzeichnet, dass** den selbsthemmenden Getrieben (11) ein gemeinsamer Antriebsmotor zugeordnet ist.

## Claims

1. A folding-top drive for actuating a motor vehicle folding top, having at least one self-locking gearing (11) via which the folding-top drive can be coupled to a folding-top linkage of the motor vehicle folding top, with the respective self-locking gearing (11) having a housing (19), a first gearing part (14) and a second gearing part (15), and having a drive motor (13) by means of which the first gearing part (14) of the respective self-locking gearing (11) is actuable, with the actuation of the first gearing part (14) being transmissible via the second gearing part (15) of the respective self-locking gearing (11) to the folding-top linkage, **characterized in that** the first gearing part (14) of the respective gearing (11) is pivotably mounted on the housing (19) of the gearing (11), with a guide element (23), which is acted on by a spring element (22), for the first gearing part (14) of the respective gearing (11) also being pivotably mounted on the housing (19) of the gearing (11), on which guide element (23) the first gearing part (14) of the respective gearing (11) is guided such that, when a force acting on the first gearing part (14) or a moment acting on said first gearing part exceeds a defined limit value, the guide element (23) can automatically be moved together with the first gearing part (14) of the respective gearing counter to the spring force of the spring element (22) from a first position, in which the first gearing part (14) and the second gearing part (15) of the respective gearing (11) are in engagement, into a second position in which the first gearing part (14) and the second gearing part (15) of the respective gearing (11) are out of engagement, and such that, when the force acting on the first gearing part (14) of the respective gearing (11) or the moment acting on said first gearing part falls below the defined limit value, the guide element (12) can automatically be moved together with the first gearing part (14) of the respective gearing by the spring force of the spring element (22) from the second position into the first position.

2. The folding-top drive as claimed in claim 1, **characterized in that** the first gearing part (14) of the respective gearing (11) comprises at least one worm housing (16) and a worm (17) held therein.

3. The folding-top drive as claimed in claim 2, **characterized in that** the second gearing part (15) of the respective gearing (11) comprises at least one worm gear (18) which interacts with the worm (14) of the first gearing part.

4. The folding-top drive as claimed in one of claims 1 to 3, **characterized in that** the first gearing part (14) of the respective gearing (11) is mounted, at a first end (21) thereof, on the housing (19) of the gearbox (11) so as to be pivotable about a first joint (20), and the guide element (23) is mounted, at a first end (24) thereof, on the housing (19) of the gearing (11) so as to be pivotable about a second joint (25), and **in that** the first gearing part (14) is guided with a second end (27), which is situated opposite the first end (21) thereof, on a second end (28) of the guide element (23), which second end is situated opposite the first end (25) of the guide element (23).

5. The folding-top drive as claimed in one of claims 1 to 4, **characterized in that** the guide element (23) is assigned a stop (31) which, when the guide element (23) is moved together with the first gearing part (14) of the respective gearing counter to the spring force of the spring element (22) from the first position into the second position, restricts the relative movement between the first gearing part (14) and the guide element (23) .

6. The folding-top drive as claimed in claim 5, **characterized in that** the first gearing part (14) of the respective gearing (11) has a guide pin (29) which is guided in a slotted guide (30) of the guide element (23), with the slotted guide (30) being assigned the stop (31) which, when the guide element (23) is moved together with the first gearing part (14) of the respective gearing (11) counter to the spring force of the spring element (22) from the first position into the second position, holds the guide pin (29) of the first gearing part (14) in the slotted guide (30) of the guide element (23).

7. The folding-top drive as claimed in claim 6, **characterized in that** the slotted guide (30) has sections (32, 33) which are angled relative to one another.

8. The folding-top drive as claimed in one of claims 1 to 7, **characterized in that** the guide element (23) is assigned an actuating element (26) by means of which the guide element (23) can manually be moved together with the first gearing part (14) of the respective gearing counter to the spring force of the spring element (22) from the first position into the second position.

9. The folding-top drive as claimed in claim 8, **characterized in that** the actuating element (26) is designed as an actuating screw, the external thread of which is guided in a recess, which has an internal thread, of the guide element (23).

10. The folding-top drive as claimed in one of claims 1 to 9, **characterized in that** said folding-top drive has two self-locking gearings (11) via which said folding-top drive can be coupled to the folding-top linkage at both sides of the motor vehicle folding top.

11. The folding-top drive as claimed in claim 10, **characterized in that** each self-locking gearing (11) is assigned a separate drive motor (13).

12. The folding-top drive as claimed in claim 10, **characterized in that** the self-locking gearings (11) are assigned a common drive motor.

## Revendications

1. Entraînement de capote pour l'actionnement d'une capote de véhicule automobile, avec au moins un mécanisme autobloquant (11), par lequel l'entraînement de capote peut être couplé à une tringlerie de capote d'une capote du véhicule automobile, dans lequel le mécanisme autobloquant respectif (11) présente un boîtier (19), une première partie de mécanisme (14) et une deuxième partie de mécanisme (15), et avec un moteur d'entraînement (13), par lequel la première partie de mécanisme (14) du mécanisme autobloquant respectif (11) peut être actionnée, dans lequel l'actionnement de la première partie de mécanisme (14) peut être transmis à la tringlerie de capote par la deuxième partie de mécanisme (15) du mécanisme autobloquant respectif (11), **caractérisé en ce que** la première partie de mécanisme (14) du mécanisme respectif (11) est montée de façon pivotante sur le boîtier (19) du mécanisme (11), dans lequel un élément de guidage (23) activé par un élément de ressort (22) pour la première partie de mécanisme (14) du mécanisme respectif (11) est en outre monté de façon pivotante sur le boîtier (19) du mécanisme (11), sur lequel la première partie de mécanisme (14) du mécanisme respectif (11) est guidée de telle manière que, lorsqu'une force appliquée à la première partie de mécanisme (11) ou un couple appliqué à celui-ci dépasse un valeur limite définie, l'élément de guidage (23) de concert avec la première partie de mécanisme (14) du mécanisme respectif puisse être transféré automatiquement contre la force élastique de l'élément de ressort (22), d'une première position, dans laquelle la première partie de mécanisme (14) et la deuxième partie de mécanisme (15) du mécanisme respectif (11) sont en prise, à une deuxième position, dans laquelle la première partie de mécanisme (14) et la deuxième partie de mécanisme (15) du mécanisme respectif (11) ne sont pas en prise, et que, lorsque la force appliquée à la première partie de mécanisme ou le couple appliqué à celui-ci descend en dessous de la valeur limite définie, l'élément de guidage (12) de concert avec la première partie de mécanisme (14) du mécanisme respectif puisse être transféré automatiquement par la force élastique de l'élément de ressort (22) de la deuxième position à la première position.

2. Entraînement de capote selon la revendication 1, **caractérisé en ce que** la première partie de mécanisme (14) du mécanisme respectif (11) comprend au moins un boîtier de vis sans fin (16) et une vis sans fin (17) logée dans celui-ci.

3. Entraînement de capote selon la revendication 2, **caractérisé en ce que** la deuxième partie de mécanisme (15) du mécanisme respectif (11) comprend au moins une roue à vis sans fin (18) coopérant avec la vis sans fin (14) de la première partie de mécanisme.

4. Entraînement de capote selon l'une quelconque des revendications 1 à 3, **caractérisé en ce que** la première partie de mécanisme (14) du mécanisme respectif (11) est montée de façon pivotante à une première extrémité (21) de celui-ci autour d'une première articulation (20) sur le boîtier (19) du mécanisme (11) et l'élément de guidage (23) est monté de façon pivotante à une première extrémité (24) de celui-ci autour d'une deuxième articulation (25) sur le boîtier (19) du mécanisme (11), et **en ce que** la première partie de mécanisme (14) est guidée avec une deuxième extrémité (27) opposée à la première extrémité (21) de celui-ci sur une deuxième extrémité (28) de l'élément de guidage (23) opposée à la première extrémité (25) de l'élément de guidage (23).

5. Entraînement de capote selon l'une quelconque des revendications 1 à 4, **caractérisé en ce qu'**une butée (31) est associée à l'élément de guidage (23) et, lorsque l'élément de guidage (23) de concert avec la première partie de mécanisme (14) du mécanisme respectif est transféré contre la force élastique de l'élément de ressort (22) de la première position à la deuxième position, limite le mouvement relatif entre la première partie de mécanisme (14) et l'élément de guidage (23).

6. Entraînement de capote selon la revendication 5, **caractérisé en ce que** la première partie de mécanisme (14) du mécanisme respectif (11) présente une goupille de guidage (29), qui est guidée dans une coulisse (30) de l'élément de guidage (23), dans lequel la butée (31) est associée à la coulisse (30) et, lorsque l'élément de guidage (23) de concert avec la première partie de mécanisme (14) du mécanisme respectif (11) est transféré contre la force élastique de l'élément de ressort (22) de la première position à la deuxième position, maintient la goupille de guidage (29) de la première partie de mécanisme (14) dans la coulisse (30) de l'élément de guidage (23).

7. Entraînement de capote selon la revendication 6, **caractérisé en ce que** la coulisse (30) présente des parties (32, 33) formant un angle l'une par rapport à l'autre.

8. Entraînement de capote selon l'une quelconque des revendications 1 à 7, **caractérisé en ce qu'**un élément d'actionnement (26) est associé à l'élément de guidage (23), à l'aide duquel l'élément de guidage (23) de concert avec la première partie de mécanisme (14) du mécanisme respectif peut être transféré manuellement contre la force élastique de l'élément de ressort (22) de la première position à la deuxième position.

9. Entraînement de capote selon la revendication 8, **caractérisé en ce que** l'élément d'actionnement (26) est réalisé sous la forme d'une vis d'actionnement, dont le filet extérieur est guidé dans un évidement de l'élément de guidage (23) présentant un filet intérieur.

10. Entraînement de capote selon l'une quelconque des revendications 1 à 9, **caractérisé en ce que** celui-ci présente deux mécanismes autobloquants (11), par lesquels celui-ci peut être couplé à la tringlerie de capote sur les deux côtés de la capote de véhicule automobile.

11. Entraînement de capote selon la revendication 10, **caractérisé en ce qu'**un moteur d'entraînement distinct (13) est associé à chaque mécanisme autobloquant (11).

12. Entraînement de capote selon la revendication 10, **caractérisé en ce qu'**un moteur d'entraînement commun est associé aux mécanismes autobloquants (11).
